# EUROPÄISCHE PATENTSCHRIFT

(11) **EP 3 749 541 B1**
(45) Veröffentlichungstag und Bekanntmachung des Hinweises auf die Patenterteilung: **09.03.2022**
(21) Anmeldenummer: 19703034.9
(22) Anmeldetag: 29.01.2019
(51) Int. Cl.: B60K 35/00, G02B 27/01

(54) **VERFAHREN, VORRICHTUNG UND COMPUTERLESBARES SPEICHERMEDIUM MIT INSTRUKTIONEN ZUR STEUERUNG EINER ANZEIGE EINER AUGMENTED-REALITY-HEAD-UP-DISPLAY-VORRICHTUNG FÜR EIN KRAFTFAHRZEUG**
METHOD, DEVICE AND COMPUTER-READABLE STORAGE MEDIUM WITH INSTRUCTIONS FOR CONTROLLING A DISPLAY OF AN AUGMENTED-REALITY HEAD-UP DISPLAY DEVICE FOR A MOTOR VEHICLE
PROCÉDÉ, DISPOSITIF ET SUPPORT D'ENREGISTREMENT LISIBLE PAR ORDINATEUR DOTÉ D'INSTRUCTIONS POUR LA COMMANDE D'UN AFFICHAGE D'UN DISPOSITIF D'AFFICHAGE TÊTE HAUTE À RÉALITÉ AUGMENTÉE D'UN VÉHICULE À MOTEUR

(30) Priorität: 06.02.2018 DE 102018201769
(43) Veröffentlichungstag der Anmeldung: 16.12.2020
(73) Patentinhaber: VOLKSWAGEN AKTIENGESELLSCHAFT, 38440 Wolfsburg (DE)
(72) Erfinder: SADOVITCH, Vitalij, 38102 Braunschweig (DE)
(86) Internationale Anmeldenummer: PCT/EP2019/052153
(87) Internationale Veröffentlichungsnummer: WO 2019/154673

(56) Entgegenhaltungen:
- DE-A1-102011 115 739
- DE-A1-102014 014 833
- DE-A1-102015 006 640
- KR-A- 20130 027 367

## Beschreibung

Die vorliegende Erfindung betrifft ein Verfahren, eine Vorrichtung und ein computerlesbares Speichermedium mit Instruktionen zur Steuerung einer Anzeige einer Augmented-Reality-Head-up-Display-Vorrichtung für ein Kraftfahrzeug. Die Erfindung betrifft weiterhin ein Kraftfahrzeug, in dem ein erfindungsgemäßes Verfahren oder eine erfindungsgemäße Vorrichtung eingesetzt wird.

Mit der stetigen Weiterentwicklung von Virtual und Augmented Reality-Technologien und -Anwendungen finden diese auch Einzug in das Automobil. Bei Augmented Reality (AR), auf Deutsch "erweiterte Realität", handelt es sich um die Anreicherung der realen Welt durch virtuelle Elemente, die im dreidimensionalen Raum ortskorrekt registriert sind und eine Echtzeitinteraktion erlauben. Da sich in der Fachwelt im deutschsprachigen Raum der Ausdruck "Augmented Reality" gegenüber dem Ausdruck "erweiterte Realität" durchgesetzt hat, wird im Folgenden ersterer benutzt. Synonym wird auch der Ausdruck "Mixed Reality" verwendet.

Eine mögliche technische Realisierung, um den Fahrerarbeitsplatz entsprechend mit perspektivisch korrekten virtuellen Erweiterungen anzureichern, bietet das Head-up-Display (HUD). Dabei werden die Lichtstrahlen eines im Armaturenbrett verbauten Displays über mehrere Spiegel und Linsen gefaltet und über eine Projektionsfläche in das Auge des Fahrers gespiegelt, sodass dieser ein virtuelles Bild außerhalb des Fahrzeugs wahrnimmt. Als Projektionsfläche dient im Automobilbereich oftmals die Frontscheibe, deren gekrümmte Form bei der Darstellung berücksichtigt werden muss. Als Alternative wird zum Teil auch eine zusätzliche Scheibe aus Glas oder Kunststoff genutzt, die zwischen dem Fahrer und der Frontscheibe auf dem Armaturenbrett angeordnet ist. Durch die optische Überlagerung von Anzeige und Fahrszene sind weniger Kopf- und Augenbewegungen zum Ablesen der Informationen notwendig. Zudem verringert sich der Adaptationsaufwand für die Augen, da abhängig von der virtuellen Distanz der Anzeige weniger bis gar nicht akkommodiert werden muss. Aktuelle Serien-HUDs beschränken sich jedoch auf Anzeigen direkt unter dem primären Sichtbereich des Fahrers und enthalten redundante Informationen, wie z.B. die Geschwindigkeitsanzeige, die auch an anderer Stelle im Cockpit wiederzufinden sind. Diese Anzeigetechnologie reduziert zwar Blickabwendungen von der Straße, hat aber weiterhin den Nachteil, dass die präsentierten Informationen interpretiert und auf die reale Situation übertragen werden müssen, da sie nicht in der realen Szene registriert sind. Dies kann in komplexen Situationen einen mental beanspruchenden kognitiven Prozess darstellen. Durch Markieren von Objekten und Einblenden von Informationen an ihrem realen Bezugsort, d.h. durch eine kontaktanaloge Darstellung, lassen sich umweltbezogene Informationen im Sichtfeld des Fahrers direkt darstellen. Diese direkte grafische Anreicherung der Umwelt in Form von Augmented Reality kann die kognitiven Transferanforderungen erheblich reduzieren.

Augmented Reality bietet vielfältige Anwendungsmöglichkeiten zur Unterstützung des Fahrers durch kontaktanaloge Markierung von Fahrbahnen und Objekten. Relativ naheliegende Beispiele beziehen sich meist auf den Bereich der Navigation. Während klassische Navigationsanzeigen in herkömmlichen Head-up-Displays in der Regel schematische Darstellungen anzeigen, z.B. einen rechtwinklig verlaufenden Pfeil nach rechts als Zeichen dafür, dass bei nächster Gelegenheit rechts abgebogen werden soll, bieten AR-Anzeigen wesentlich effektivere Möglichkeiten. Da die Anzeigen als "Teil der Umwelt" dargestellt werden können, können dem Fahrer z.B. sehr effektiv Navigationshinweise oder Gefahrenwarnungen direkt am realen Bezugsort präsentiert werden.

Vor diesem Hintergrund beschreibt die DE 10 2013 016 251 A1 ein Verfahren zur augmentierten Darstellung mindestens einer Zusatzinformation in mindestens einem Bild einer Fahrzeugumgebung eines Fahrzeugs. Das Bild bildet einen Hintergrund einer Anzeige. Die Zusatzinformation wird in Abhängigkeit von mindestens einer momentanen Fahr- oder Umgebungssituation farblich geändert oder animiert im Hintergrund überlagert ausgegeben.

Weiterhin beschreibt die DE 10 2016 009 506 A1 ein Verfahren zur Darstellung von Umgebungsinformationen eines Fahrzeugs, bei welchem reale Objekte der Umgebung im Fahrzeug optisch angezeigt werden. Dabei werden virtuelle Objekte in Form einer erweiterten Realität den realen Objekten überlagert. Aufgrund eines aktuellen Bewegungsprofils des Fahrzeugs oder eines Bewegungsprofils mindestens eines realen Objektes in der Umgebung des Fahrzeugs wird ein Zeitpunkt zur Anzeige des virtuellen Objektes bestimmt.

Die DE 10 2014 014833 A1 beschreibt die kontaktanalog überlagerte Darstellung von Umgebungsinformationen in einer Anzeigeeinheit. Dabei wird ein erster Darstellungsmodus unterschieden, bei dem virtuelle Informationen realen optischen Umgebungsinformationen überlagert dargestellt werden, während in einem zweiten Darstellungsmodus virtuelle Informationen in einem gegenüber dem ersten Darstellungsmodus degradierten Darstellung mit verringertem Grad der Kontaktanalogie dargestellt werden. Die Umschaltung zwischen den beiden Modi richtet sich danach, dass ein bestimmtes Umgebungsobjekt verdeckt ist oder den Darstellungsbereich verlassen hat.

In der KR 2013 0027367 A wird ein Navigationsgerät mit Head-up-Anzeigetechnik vorgeschlagen, bei dem Routeninformationen auf der Frontscheibe eines Fahrzeugs angezeigt werden. Dabei wird die 3D-Position der Benutzeraugen mithilfe eines 3D-Tiefensensors bestimmt. Eine Kameraeinheit erhält zusätzlich Frontbilder eines Fahrzeugs. Mit einer Bildverarbeitungseinheit werden die Frontbilder verarbeitet und im Sinne einer erweiterten Realität unter Berücksichtigung der 3D-Position der Benutzeraugen auf der Frontscheibe des Fahrzeugs ausgegeben.

In der DE 10 2011 115739 A1 wird eine perspektivische Darstellung virtuell erzeugter 3D-Objekte in Fahrzeuganzeigen vorgeschlagen, bei dem mittels von einer oder mehrerer Kameras erzeugten Bildern ein 3D-Objektraum bereitgestellt wird. Dazu wird der Straßenverlauf aus den Bildern extrahiert und mit einem Umgebungsmodell verschnitten, und dabei ortsgenau eingeblendet. Das so synthetisierte Bild wird auf einer Anzeigeeinrichtung wiedergegeben.

Die DE 10 2015 006640 schlägt die Darstellung augmentierter Navigationselement durch ein Head-up-Display-System eines Fahrzeugs vor. Aufgrund des beschränkten Sichtfeld des Head-up-Display-Systems wird ein Navigationshinweis dann nicht kontaktanalog dargestellt, wenn er außerhalb des beschränkten Sichtfelds lokalisiert wäre. Stattdessen wird eine richtungsanaloges Navigationselement dargestellt. Der kontaktanaloge Navigationshinweis und das richtungsanaloge Navigationselement vereinen sich, sobald ein auf der Fahrstrecke folgender Manöverpunkt außerhalb des Projektionsbereichs liegt.

Eine Registrierung der virtuellen Informationen im realen Sichtfeld des Fahrers im Sinne von Augmented Reality stellt sehr hohe Anforderungen an die technische Umsetzung. Um virtuelle Inhalte ortsgenau und perspektivisch korrekt in der Realität darstellen zu können, ist sehr detailliertes Wissen über die Umgebung und Eigenbewegung des Fahrzeugs notwendig. Damit die virtuelle Einblendung für den Fahrer perspektivisch korrekt in der Welt liegt, muss sie in Abhängigkeit von der Lage des Fahrzeugs im dreidimensionalen Raum positioniert und ausgerichtet sein. Dazu ist es notwendig, das Fahrzeug auf wenige Zentimeter genau zu verorten. Selbst mit DGPS-Systemen (DGPS : Differential Global Positioning System; Differentielles globales Positionierungssystem) kann jedoch nur eine Genauigkeit von etwa 2m erzielt werden. Mithilfe einer Sensorfusion, beispielsweise aus GPS (GPS: Global Positioning System; Globales Positionierungssystem) und Kameradaten zu den Fahrbahnmarkierungen, kann die Präzision gesteigert werden. Darstellungsfehler aufgrund von Ungenauigkeiten sind jedoch nicht auszuschließen. Studien haben gezeigt, dass solche Ungenauigkeiten dazu führen können, dass die augmentierten Inhalte falsch interpretiert werden und die Funktion somit keine Unterstützung bietet. Beispielsweise kann die Ungenauigkeit bei der kontaktanalogen Navigation dazu führen, dass der kontaktanaloge Navigationshinweis vom Fahrer einer falschen Abbiegung zugeordnet wird [1].

Es ist eine Aufgabe der Erfindung, Lösungen für die Steuerung einer Anzeige einer Augmented-Reality-Head-up-Display-Vorrichtung für ein Kraftfahrzeug aufzuzeigen, die eine verbesserte Eindeutigkeit fehlerhaft positionierter kontaktanaloger Navigationsmarkierungen ermöglichen.

Diese Aufgabe wird durch ein Verfahren mit den Merkmalen des Anspruchs 1, durch ein computerlesbares Speichermedium mit Instruktionen gemäß Anspruch 11 und durch eine Vorrichtung mit den Merkmalen des Anspruchs 12 gelöst. Bevorzugte Ausgestaltungen der Erfindung sind Gegenstand der abhängigen Ansprüche.

Gemäß einem ersten Aspekt der Erfindung umfasst ein Verfahren zur Steuerung einer Anzeige einer Augmented-Reality-Head-up-Display-Vorrichtung für ein Kraftfahrzeug die Schritte:
- Generieren einer Navigationsmarkierung für eine kontaktanaloge Anzeige durch die Augmented-Reality-Head-up-Display-Vorrichtung;
- Generieren einer Referenzmarkierung für eine Anzeige durch die Augmented-Reality-Head-up-Display-Vorrichtung; und
- Ausgeben der Navigationsmarkierung und der Referenzmarkierung zur Anzeige durch die Augmented-Reality-Head-up-Display-Vorrichtung.

Gemäß einem weiteren Aspekt der Erfindung enthält ein computerlesbares Speichermedium Instruktionen, die bei Ausführung durch einen Computer den Computer zur Ausführung der folgende Schritte zur Steuerung einer Anzeige einer Augmented-Reality-Head-up-Display-Vorrichtung für ein Kraftfahrzeug veranlassen:
- Generieren einer Navigationsmarkierung für eine kontaktanaloge Anzeige durch die Augmented-Reality-Head-up-Display-Vorrichtung;
- Generieren einer Referenzmarkierung für eine Anzeige durch die Augmented-Reality-Head-up-Display-Vorrichtung; und
- Ausgeben der Navigationsmarkierung und der Referenzmarkierung zur Anzeige durch die Augmented-Reality-Head-up-Display-Vorrichtung.

Der Begriff Computer ist dabei breit zu verstehen. Insbesondere umfasst er auch Steuergeräte und andere prozessorbasierte Datenverarbeitungsvorrichtungen.

Gemäß einem weiteren Aspekt der Erfindung weist eine Vorrichtung zur Steuerung einer Anzeige einer Augmented-Reality-Head-up-Display-Vorrichtung für ein Kraftfahrzeug auf:
- einen Grafikgenerator zum Generieren einer Navigationsmarkierung für eine kontaktanaloge Anzeige durch die Augmented-Reality-Head-up-Display-Vorrichtung und zum Generieren einer Referenzmarkierung für eine Anzeige durch die Augmented-Reality-Head-up-Display-Vorrichtung; und
- einen Ausgang zum Ausgeben der Navigationsmarkierung und der Referenzmarkierung zur Anzeige durch die Augmented-Reality-Head-up-Display-Vorrichtung.

Bei der erfindungsgemäßen Lösung werden die Auswirkungen einer möglicherweise fehlerhaften Positionierung einer Navigationsmarkierung dadurch reduziert, dass zusätzlich zur Navigationsmarkierung zumindest eine Referenzmarkierung generiert und durch die Augmented-Reality-Head-up-Display-Vorrichtung angezeigt wird. Die Genauigkeitserhöhung beruht darauf, dass der Fahrer anhand der Referenzmarkierung eine eventuelle Mehrdeutigkeit der Navigationsmarkierung auflösen kann. Die Referenzmarkierung hilft dem Fahrer somit bei der Interpretation der Navigationsmarkierung.

Gemäß einem Aspekt der Erfindung wird die Referenzmarkierung für eine kontaktanaloge Anzeige durch die Augmented-Reality-Head-up-Display-Vorrichtung generiert. Eine derartige kontaktanaloge Anzeige hat den Vorteil, dass sie sich unauffällig in die Augmented-Reality-Darstellung integrieren lässt. Der Fahrer muss sich daher nicht mit verschiedenen gleichzeitig genutzten Darstellungsformen auseinandersetzen.

Gemäß einem Aspekt der Erfindung wird die Referenzmarkierung für eine situationsanaloge Anzeige durch die Augmented-Reality-Head-up-Display-Vorrichtung generiert. In diesem Fall umfasst die Referenzmarkierung vorzugsweise eine schematische Darstellung einer Trajektorie des Kraftfahrzeugs. Anhand der Trajektorie kann der Fahrer bei Bedarf leicht feststellen, wie er eine eventuell mehrdeutige Navigationsmarkierung zu interpretieren hat, z.B. auf welche von mehreren möglichen Abbiegungen sich die Navigationsmarkierung bezieht. Die situationsanaloge Darstellung erfordert dabei nur einen geringen Rechenaufwand, da z.B. auf einen Katalog von Situationen zurückgegriffen werden kann. In einem solchen Katalog können beispielsweise schematische Darstellungen von typischen Kreuzungsszenarien abgelegt sein.

Gemäß einem Aspekt der Erfindung wird die Referenzmarkierung auf Basis eines Referenzobjekts in einer Umgebung des Kraftfahrzeugs generiert. Vorzugsweise ist das Referenzobjekt ein statisches Objekt, beispielsweise ein Fahrzeug, ein Gebäude, ein Pfeiler, ein Verkehrszeichen, eine Laterne oder ein Stadtmöbelstück. Eine Augmentierung dieser Objekte gibt der kontaktanalogen Navigationsmarkierung eine zusätzliche Referenz. Bei Vorliegen von Ungenauigkeiten, die z.B. durch Fahrzeugbewegungen auftreten, betreffen diese sowohl die Navigationsmarkierung als auch die Referenzmarkierung. Bei einer fehlerhaft positionierten Referenzmarkierung ist für den Fahrer in der Regel immer noch erkennbar, welches Referenzobjekt markiert sein soll. Aus der Abweichung zwischen dem Referenzobjekt und der Referenzmarkierung ist für den Fahrer ersichtlich, in welcher Form und Stärke sich der Darstellungsfehler ausprägt. Dieses Wissen hilft dem Fahrer bei der Interpretation der ebenso fehlerhaft dargestellten Navigationsmarkierung. Auch bei einer situationsanalogen Anzeige können Referenzobjekte dem Fahrer Hinweise für das Verständnis einer Navigationsmarkierung liefern, beispielsweise indem die schematische Darstellung des Kreuzungsszenarios um Markierungen geparkter Fahrzeuge angereichert wird.

Gemäß einem Aspekt der Erfindung werden das Referenzobjekt und seine Position aus einer Karte ermittelt, auf deren Grundlage auch die Navigationsmarkierung generiert wird. Dies hat den Vorteil, dass die Bestimmung der Position mit nur geringem Aufwand verbunden ist. Da die Generierung der Navigationsmarkierung und die Generierung der Referenzmarkierung auf der gleichen Datenbasis erfolgt, kann direkt eine integrierte Darstellung der verschiedenen Markierungen erzeugt werden.

Gemäß einem Aspekt der Erfindung werden das Referenzobjekt und seine Position mittels einer Sensorik des Kraftfahrzeugs ermittelt. Beispielsweise können Objekte mittels eines Radars, eines Lidars oder einer Stereokamera erkannt und klassifiziert werden. Für eine integrierte Darstellung der Referenzmarkierung mit der Navigationsmarkierung wird in diesem Fall eine ermittelte Position des erkannten Referenzobjekts relativ zum Kraftfahrzeug in eine absolute Position umgerechnet. Beispielsweise kann die Relativposition unter Verwendung der aktuellen GPS-Position des Kraftfahrzeugs in Weltkoordinaten umgerechnet werden. Die Bestimmung des Referenzobjekts und seiner Position mittels einer Sensorik des Kraftfahrzeugs erfordert zwar einen höheren Rechenaufwand, im Gegenzug stehen aber deutlich mehr mögliche Referenzobjekte zur Verfügung, als dies bei ausschließlicher Verwendung einer Karte der Fall wäre. Insbesondere können auf diese Weise auch geparkte oder fahrende Kraftfahrzeuge als Referenzobjekte genutzt werden.

Besonders vorteilhaft wird ein erfindungsgemäßes Verfahren oder eine erfindungsgemäße Vorrichtung in einem Fahrzeug, insbesondere einem Kraftfahrzeug, eingesetzt.

Weitere Merkmale der vorliegenden Erfindung werden aus der nachfolgenden Beschreibung und den angehängten Ansprüchen in Verbindung mit den Figuren ersichtlich.
- Fig. 1: zeigt schematisch ein Verfahren zur Steuerung einer Anzeige einer Augmented-Reality-Head-up-Display-Vorrichtung für ein Kraftfahrzeug;
- Fig. 2: zeigt eine erste Ausführungsform einer Vorrichtung zur Steuerung einer Anzeige einer Augmented-Reality-Head-up-Display-Vorrichtung für ein Kraftfahrzeug;
- Fig. 3: zeigt eine zweite Ausführungsform einer Vorrichtung zur Steuerung einer Anzeige einer Augmented-Reality-Head-up-Display-Vorrichtung für ein Kraftfahrzeug;
- Fig. 4: stellt schematisch ein Kraftfahrzeug dar, in dem eine erfindungsgemäße Lösung realisiert ist;
- Fig. 5: zeigt schematisch einen allgemeinen Aufbau einer Augmented-Reality-Head-up-Display-Vorrichtung für ein Kraftfahrzeug;
- Fig. 6: zeigt eine Augmented-Reality-Darstellung einer fehlerfrei positionierten Navigationsmarkierung;
- Fig. 7: zeigt eine Augmented-Reality-Darstellung einer fehlerhaft positionierten Navigationsmarkierung;
- Fig. 8: zeigt eine Augmented-Reality-Darstellung einer fehlerfrei positionierten Navigationsmarkierung mit zusätzlichen kontaktanalogen Referenzmarkierungen;
- Fig. 9: zeigt eine Augmented-Reality-Darstellung einer fehlerhaft positionierten Navigationsmarkierung mit zusätzlichen kontaktanalogen Referenzmarkierungen; und
- Fig. 10: zeigt eine Augmented-Reality-Darstellung einer fehlerhaft positionierten Navigationsmarkierung mit einer zusätzlichen situationsanalogen Referenzmarkierung.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

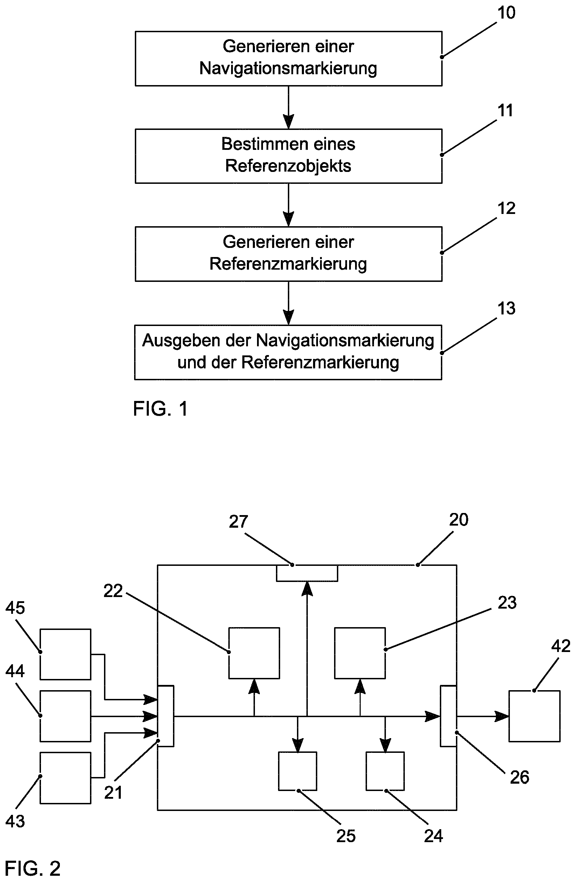

Fig. 1 zeigt schematisch ein Verfahren zur Steuerung einer Anzeige einer Augmented-Reality-Head-up-Display-Vorrichtung für ein Kraftfahrzeug. Ein Grafikgenerator generiert 10 eine Navigationsmarkierung für eine kontaktanaloge Anzeige durch die Augmented-Reality-Head-up-Display-Vorrichtung. Mittels einer geeigneten Methodik kann zusätzlich ein Referenzobjekt bestimmt werden 11, beispielsweise ein statisches Objekt in einer Umgebung des Kraftfahrzeugs. Das Referenzobjekt und seine Position können z.B. aus einer Karte ermittelt werden, auf deren Grundlage auch die Navigationsmarkierung generiert wird 10. Alternativ können das Referenzobjekt und seine Position mittels einer Sensorik des Kraftfahrzeugs ermittelt werden.

Der Grafikgenerator generiert 12 zudem eine Referenzmarkierung für eine Anzeige durch die Augmented-Reality-Head-up-Display-Vorrichtung. Die Referenzmarkierung kann dabei für eine kontaktanaloge Anzeige oder eine situationsanaloge Anzeige generiert werden. Vorzugsweise wird die Referenzmarkierung auf Basis des Referenzobjekts generiert. Insbesondere im Falle einer situationsanalogen Anzeige kann die Referenzmarkierung eine schematische Darstellung einer Trajektorie des Kraftfahrzeugs umfassen. Für eine integrierte Darstellung der Referenzmarkierung mit der Navigationsmarkierung wird eine ermittelte Position des erkannten Referenzobjekts relativ zum Kraftfahrzeug vorzugsweise in eine absolute Position umgerechnet.

Die Navigationsmarkierung und die Referenzmarkierung werden schließlich zur Anzeige durch die Augmented-Reality-Head-up-Display-Vorrichtung an ein Steuergerät der Augmented-Reality-Head-up-Display-Vorrichtung ausgegeben 13. Anstelle einer Ausgabe der generierten Markierungen an das Steuergerät kann alternativ lediglich eine Anweisung an das Steuergerät ausgegeben werden, entsprechende Markierungen zu generieren. Ebenso ist es möglich, dass das beschriebene Verfahren vollständig vom Steuergerät der Augmented-Reality-Head-up-Display-Vorrichtung ausgeführt wird.

Fig. 2 zeigt eine vereinfachte schematische Darstellung einer ersten Ausführungsform einer Vorrichtung 20 zur Steuerung einer Anzeige einer Augmented-Reality-Head-up-Display-Vorrichtung für ein Kraftfahrzeug. Die Vorrichtung 20 hat einen Eingang 21, über den beispielsweise Bilddaten einer Kamera 43, Daten eines Sensorsystems 44 oder Daten eines Navigationssystems 45 empfangen werden können. Das Sensorsystem 44 kann beispielsweise einen Laserscanner oder eine Stereokamera zum Detektieren von Objekten in einer Umgebung des Kraftfahrzeugs aufweisen. Die Vorrichtung 20 hat zudem eine Analyseeinheit 22, die auf Basis der empfangenen Daten ein Referenzobjekt und dessen Position bestimmen kann, beispielsweise ein statisches Objekt in einer Umgebung des Kraftfahrzeugs. Die Analyseeinheit 22 kann das Referenzobjekt und seine Position z.B. aus einer Karte ermitteln, auf deren Grundlage auch Navigationsmarkierungen generiert werden. Alternativ kann die Analyseeinheit 22 das Referenzobjekt und seine Position auch aus den Bilddaten der Kamera 43 oder den Daten des Sensorsystems 44 ermitteln.

Ein Grafikgenerator 23 generiert eine Navigationsmarkierung für eine kontaktanaloge Anzeige durch die Augmented-Reality-Head-up-Display-Vorrichtung sowie eine Referenzmarkierung für eine Anzeige durch die Augmented-Reality-Head-up-Display-Vorrichtung. Die Referenzmarkierung kann dabei für eine kontaktanaloge Anzeige oder eine situationsanaloge Anzeige generiert werden. Vorzugsweise wird die Referenzmarkierung auf Basis des Referenzobjekts generiert. Insbesondere im Falle einer situationsanalogen Anzeige kann die Referenzmarkierung eine schematische Darstellung einer Trajektorie des Kraftfahrzeugs umfassen. Für eine integrierte Darstellung der Referenzmarkierung mit der Navigationsmarkierung wird eine ermittelte Position des erkannten Referenzobjekts relativ zum Kraftfahrzeug vorzugsweise in eine absolute Position umgerechnet.

Über einen Ausgang 26 der Vorrichtung 20 werden die Navigationsmarkierung und die Referenzmarkierung an ein Steuergerät 42 der Augmented-Reality-Head-up-Display-Vorrichtung ausgegeben. Alternativ kann auch lediglich eine Anweisung an das Steuergerät 42 ausgegeben werden, entsprechende Markierungen zu generieren. Das Steuergerät 42 kann dann die Markierungen in eine Anzeige der Augmented-Reality-Head-up-Display-Vorrichtung einfügen.

Die Analyseeinheit 22 und der Grafikgenerator 23 können von einer Kontrolleinheit 24 gesteuert werden. Über eine Benutzerschnittstelle 27 können gegebenenfalls Einstellungen der Analyseeinheit 22, des Grafikgenerators 23 oder der Kontrolleinheit 24 geändert werden. Die in der Vorrichtung 20 anfallenden Daten können bei Bedarf in einem Speicher 25 der Vorrichtung 20 abgelegt werden, beispielsweise für eine spätere Auswertung oder für eine Nutzung durch die Komponenten der Vorrichtung 20. Die Analyseeinheit 22, der Grafikgenerator 23 sowie die Kontrolleinheit 24 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU. Der Eingang 21 und der Ausgang 26 können als getrennte Schnittstellen oder als eine kombinierte bidirektionale Schnittstelle implementiert sein. Im beschriebenen Beispiel ist die Vorrichtung 20 eine eigenständige Komponente. Sie kann aber ebenso im Steuergerät 42 der Augmented-Reality-Head-up-Display-Vorrichtung integriert sein.

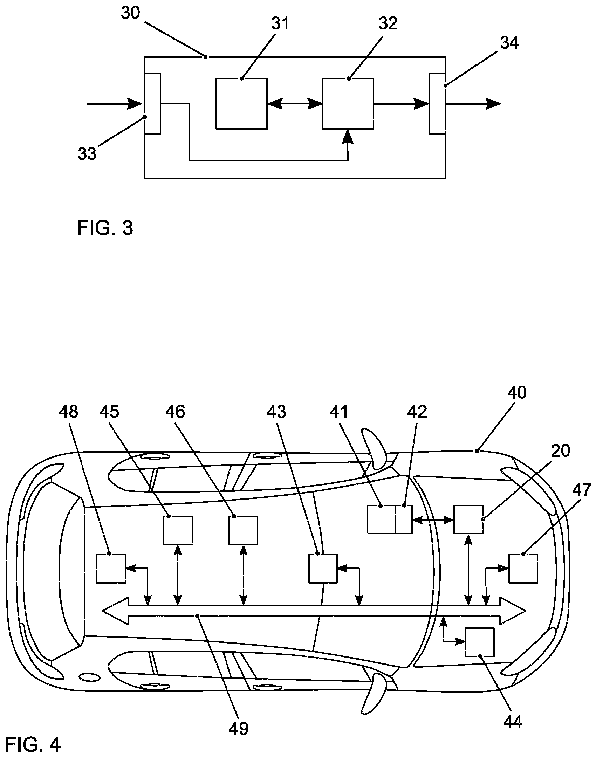

Fig. 3 zeigt eine vereinfachte schematische Darstellung einer zweiten Ausführungsform einer Vorrichtung 30 zur Steuerung einer Anzeige einer Augmented-Reality-Head-up-Display-Vorrichtung für ein Kraftfahrzeug. Die Vorrichtung 30 weist einen Prozessor 32 und einen Speicher 31 auf. Beispielsweise handelt es sich bei der Vorrichtung 30 um einen Computer oder ein Steuergerät. Im Speicher 31 sind Instruktionen abgelegt, die die Vorrichtung 30 bei Ausführung durch den Prozessor 32 veranlassen, die Schritte gemäß einem der beschriebenen Verfahren auszuführen. Die im Speicher 31 abgelegten Instruktionen verkörpern somit ein durch den Prozessor 32 ausführbares Programm, welches das erfindungsgemäße Verfahren realisiert. Die Vorrichtung 30 hat einen Eingang 33 zum Empfangen von Informationen, beispielsweise von Navigationsdaten oder Daten zu einer Umgebung des Kraftfahrzeugs. Vom Prozessor 32 generierte Daten werden über einen Ausgang 34 bereitgestellt. Darüber hinaus können sie im Speicher 31 abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 25, 31 der beschriebenen Ausführungsformen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

Fig. 4 stellt schematisch ein Kraftfahrzeug 40 dar, in dem eine erfindungsgemäße Lösung realisiert ist. Das Kraftfahrzeug 40 weist eine Augmented-Reality-Head-up-Display-Vorrichtung 41 mit einem zugehörigen Steuergerät 42 auf. Weiterhin weist das Kraftfahrzeug 40 eine Vorrichtung 20 zur Steuerung einer Anzeige der Augmented-Reality-Head-up-Display-Vorrichtung 41 auf. Die Vorrichtung 20 kann natürlich auch in die Augmented-Reality-Head-up-Display-Vorrichtung 41 oder in das Steuergerät 42 der Augmented-Reality-Head-up-Display-Vorrichtung 41 integriert sein. Weitere Komponenten des Kraftfahrzeugs 40 sind eine Kamera 43 und ein Sensorsystem 44 zur Erfassung von Objekten, ein Navigationssystem 45, eine Datenübertragungseinheit 46 sowie eine Reihe von Assistenzsystemen 47, von denen eines exemplarisch dargestellt ist. Mittels der Datenübertragungseinheit 46 kann eine Verbindung zu Dienstanbietern aufgebaut werden, beispielsweise zum Abrufen von Kartendaten. Zur Speicherung von Daten ist ein Speicher 48 vorhanden. Der Datenaustausch zwischen den verschiedenen Komponenten des Kraftfahrzeugs 40 erfolgt über ein Netzwerk 49.

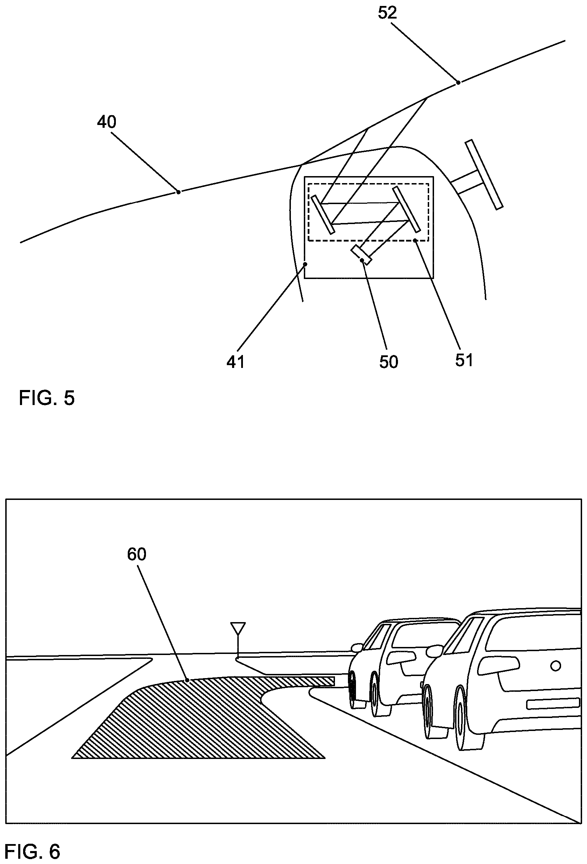

Fig. 5 zeigt schematisch eine Augmented-Reality-Head-up-Display-Vorrichtung 41 für ein Kraftfahrzeug 40, mit deren Hilfe Inhalte auf einer Projektionsfläche 52 des Kraftfahrzeugs 40 angezeigt werden können, beispielsweise auf der Frontscheibe oder auf einer zusätzlichen Scheibe aus Glas oder Kunststoff, die zwischen dem Fahrer und der Frontscheibe auf dem Armaturenbrett angeordnet ist. Die dargestellten Inhalte werden durch eine bildgebende Einheit 50 erzeugt und mit Hilfe eines optischen Moduls 51 auf die Projektionsfläche 52 projiziert. Typischerweise erfolgt die Projektion dabei in einen Bereich der Frontscheibe oberhalb des Lenkrades. Die bildgebende Einheit 50 kann beispielsweise ein LCD-TFT-Display sein. Die Augmented-Reality-Head-up-Display-Vorrichtung 41 ist in der Regel in einem Armaturenbrett des Kraftfahrzeugs 40 verbaut.

Nachfolgend sollen bevorzugte Ausführungsformen der Erfindung anhand der Figuren 6 bis 10 beschrieben werden.

Fig. 6 zeigt ein Beispiel einer Augmented-Reality-Darstellung einer fehlerfrei positionierten Navigationsmarkierung 60. Dargestellt ist der Fall eines relativ komplexen Kreuzungsszenarios, bei dem zwei Abbiegungen in kurzer Distanz aufeinander folgen. Durch die Navigationsmarkierung 60 wird die erste Abbiegung augmentiert. Trotz der komplexen Situation ist für den Fahrer eindeutig erkennbar, welcher Abbiegung er folgen muss.

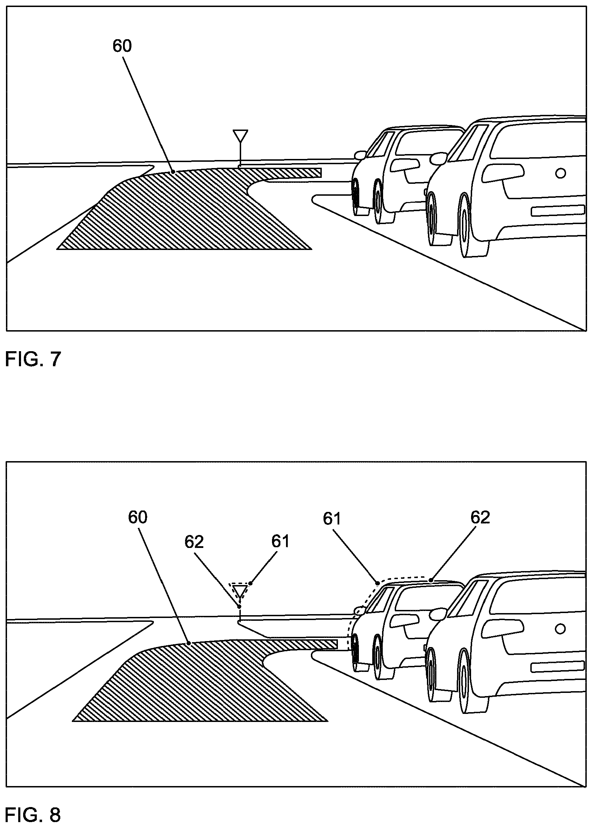

Fig. 7 zeigt die Augmented-Reality-Darstellung für das Kreuzungsszenario aus Fig. 6 im Falle einer fehlerhaft positionierten Navigationsmarkierung 60. Bei Vorliegen einer solchen Ungenauigkeit, die z.B. durch Fahrzeugbewegungen verursacht werden kann, kann die Navigationsmarkierung 60 mehrdeutig werden und vom Fahrer falsch interpretiert werden. Die Mehrdeutigkeit liegt darin, dass es mehrere mögliche Abbiegungen gibt, von denen jedoch nur eine einzige augmentiert wird. Dies kann zur Folge haben, dass der Fahrer sich für eine falsche Abbiegung entscheidet. Im dargestellten Beispiel ist unklar, ob die Navigationsmarkierung 60 sich auf die erste Abbiegung oder auf die zweite Abbiegung bezieht. Da die erste Abbiegung nur in eine kleine Seitenstraße mündet, während die zweite Abbiegung mit Verkehrszeichen gesichert ist und in eine größere Straße mündet, besteht eine recht große Wahrscheinlichkeit, dass der Fahrer sich fälschlich für diese Abbiegung entscheidet.

Fig. 8 zeigt eine Augmented-Reality-Darstellung für das Kreuzungsszenario aus Fig. 6 im Falle einer fehlerfrei positionierten Navigationsmarkierung 60, bei der zusätzliche kontaktanaloge Referenzmarkierungen 61 eingeblendet werden. Mit den Referenzmarkierungen 61, dargestellt durch gestrichelte Linien, werden in diesem Beispiel verschiedene Referenzobjekte 62 augmentiert. Bei den Referenzobjekten 62 handelt es sich zum einen um ein Verkehrszeichen, zum anderen um ein geparktes Fahrzeug. Als Referenzobjekte 62 bieten sich insbesondere statische Objekte an, wie geparkte Fahrzeuge, Gebäude, Pfeiler, Verkehrszeichen und Ampeln, Laternen oder Elemente der Stadtmöblierung, z.B. Werbetafeln und Litfaßsäulen, Wartehäuschen an Bushaltestellen, Sitzbänke, Poller, etc. Es können jedoch auch dynamische Objekte genutzt werden, wie z.B. andere bewegte Fahrzeuge. Im Falle einer fehlerfrei positionierten Navigationsmarkierung 60 bringen die zusätzlichen Referenzmarkierungen 61 dem Fahrer nicht unmittelbar einen Vorteil. Der Vorteil zeigt sich dann, wenn die Navigationsmarkierung 60 fehlerhaft positioniert ist.

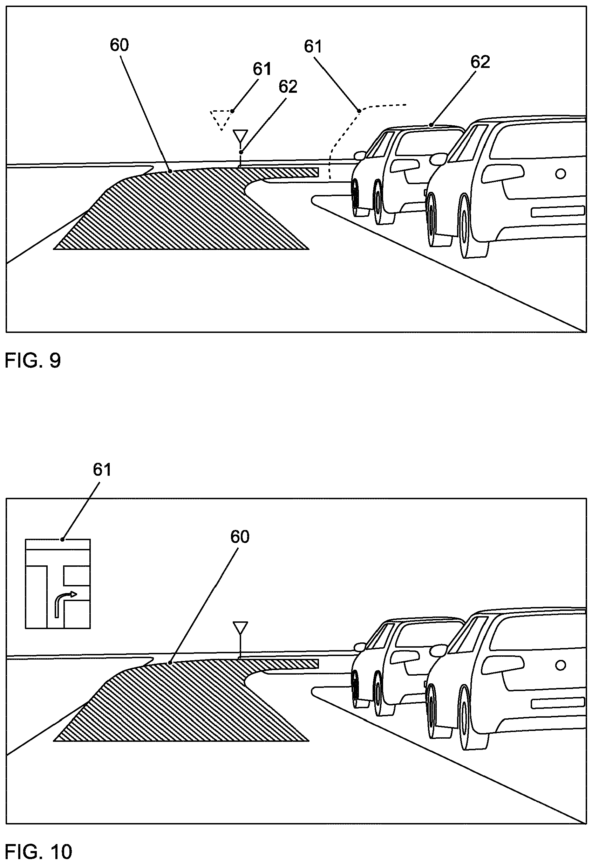

Fig. 9 zeigt die Augmented-Reality-Darstellung aus Fig. 8 im Falle einer fehlerhaft positionierten Navigationsmarkierung 60. Hier sind die Navigationsmarkierung 60 und die Referenzmarkierungen 61 im gleichen Maße fehlerhaft, da sich die Ursachen der Ungenauigkeiten sowohl auf die Navigationsmarkierung 60 als auch auf die Referenzmarkierungen 61 auswirken. Der Fahrer kann anhand der verschobenen Referenzmarkierungen 61 erkennen, dass er direkt hinter dem parkenden Fahrzeug und noch vor dem ersten Verkehrszeichen abbiegen soll. Damit ist eindeutig, dass die Navigationsmarkierung 60 zu weit nach oben bzw. hinten zeigt und die erste Abbiegung die korrekte ist.

Die Darstellung der Referenzmarkierung 61 muss nicht zwingend kontaktanalog erfolgen. Es ist beispielsweise auch eine situationsanaloge Darstellung des Kreuzungsszenarios in Kombination mit der kontaktanalogen Navigationsmarkierung 60 möglich. Fig. 10 zeigt ein Beispiel einer Augmented-Reality-Darstellung einer fehlerhaft positionierten Navigationsmarkierung 60 mit einer solchen zusätzlichen situationsanalogen Referenzmarkierung 61. Die Referenzmarkierung 61 wird hier durch eine schematische Darstellung des Kreuzungsszenarios mit einem integrierten Abbiegepfeil gebildet. Auch eine derartige Referenzmarkierung 61 ist geeignet, als Zusatz zu einer kontaktanalogen Darstellung die Verständlichkeit der Anzeige bei Ungenauigkeit zu erhöhen. Gegebenenfalls kann die Referenzmarkierung 61 mit Markierungen erkannter Objekte angereichert werden, z.B. mit einer schematischen Darstellung der geparkten Fahrzeuge.

### Bezugszeichenliste

- 10: Generieren einer Navigationsmarkierung
- 11: Bestimmen eines Referenzobjekts
- 12: Generieren einer Referenzmarkierung
- 13: Ausgeben der Navigationsmarkierung und der Referenzmarkierung
- 20: Vorrichtung
- 21: Eingang
- 22: Analyseeinheit
- 23: Grafikgenerator
- 24: Kontrolleinheit
- 25: Speicher
- 26: Ausgang
- 27: Benutzerschnittstelle
- 30: Vorrichtung
- 31: Speicher
- 32: Prozessor
- 33: Eingang
- 34: Ausgang
- 40: Kraftfahrzeug
- 41: Augmented-Reality-Head-up-Display-Vorrichtung
- 42: Steuergerät der Augmented-Reality-Head-up-Display-Vorrichtung
- 43: Kamera
- 44: Sensorsystem
- 45: Navigationssystem
- 46: Datenübertragungseinheit
- 47: Assistenzsystem
- 48: Speicher
- 49: Netzwerk
- 50: Bildgebende Einheit
- 51: Optisches Modul
- 52: Projektionsfläche
- 60: Navigationsmarkierung
- 61: Referenzmarkierung
- 62: Referenzobjekt

### Referenzen

[1] L. Pfannmüller et al.: " Lead me the right way?! The impact of position accuracy of augmented reality navigation arrows in a contact analogue head-up display on driving performance, workload, and usability", Proceedings of the 19th Treinnial Congress of the International Ergonomics Association (IEA) 2015

## Patentansprüche

1. Verfahren zur Steuerung einer Anzeige einer Augmented-Reality-Head-up-Display-Vorrichtung (41) für ein Kraftfahrzeug (40), mit den Schritten:
- Generieren (10) einer Navigationsmarkierung (60) für eine kontaktanaloge Anzeige durch die Augmented-Reality-Head-up-Display-Vorrichtung (41);
- Generieren (12) einer Referenzmarkierung (61) für eine kontaktanaloge Anzeige durch die Augmented-Reality-Head-up-Display-Vorrichtung (41) auf Basis eines Referenzobjekts (62) in einer Umgebung des Kraftfahrzeugs (40); und
- Ausgeben (13) der Navigationsmarkierung (60) und der Referenzmarkierung (61) zur Anzeige durch die Augmented-Reality-Head-up-Display-Vorrichtung (41); **dadurch gekennzeichnet, dass** durch eine Abweichung zwischen dem Referenzobjekt (62) und der Referenzmarkierung (61), Form und Stärke eines Darstellungsfehlers, der zu einer fehlerhaft positionierten Navigationsmarkierung (60) führt, für einen Fahrer des Kraftfahrzeugs (40) ersichtlich werden.

2. Verfahren gemäß Anspruch 1, wobei das Referenzobjekt (62) und seine Position aus einer Karte ermittelt werden, auf deren Grundlage auch die Navigationsmarkierung (60) generiert wird (10).

3. Verfahren gemäß Anspruch 1, wobei das Referenzobjekt (62) und seine Position mittels einer Sensorik (43, 44) des Kraftfahrzeugs (40) ermittelt werden.

4. Verfahren gemäß Anspruch 3, wobei eine ermittelte Position des erkannten Referenzobjekts (62) relativ zum Kraftfahrzeug (40) für eine integrierte Darstellung der Referenzmarkierung (61) mit der Navigationsmarkierung (60) in eine absolute Position umgerechnet wird.

5. Verfahren gemäß einem der Ansprüche 1 bis 4, wobei das Referenzobjekt (62) ein statisches Objekt ist.

6. Verfahren gemäß Anspruch 5, wobei das statische Objekt eines der folgenden Objekte ist: ein Fahrzeug, ein Gebäude, ein Pfeiler, ein Verkehrszeichen, eine Laterne oder ein Stadtmöbelstück.

7. Computerlesbares Speichermedium mit Instruktionen, die bei Ausführung durch einen Computer den Computer zur Ausführung der Schritte eines Verfahrens gemäß einem der Ansprüche 1 bis 6 zur Steuerung einer Anzeige einer Augmented-Reality-Head-up-Display-Vorrichtung (41) für ein Kraftfahrzeug (40) veranlassen.

8. Vorrichtung (20) zur Steuerung einer Anzeige einer Augmented-Reality-Head-up-Display-Vorrichtung (41) für ein Kraftfahrzeug (40), mit
- einem Grafikgenerator (23) zum Generieren (10) einer Navigationsmarkierung (60) für eine kontaktanaloge Anzeige durch die Augmented-Reality-Head-up-Display-Vorrichtung (41) und zum Generieren (12) einer Referenzmarkierung (61) für eine kontaktanaloge Anzeige durch die Augmented-Reality-Head-up-Display-Vorrichtung (41) auf Basis eines Referenzobjekts (62) in einer Umgebung des Kraftfahrzeugs (40); und
- einem Ausgang (26) zum Ausgeben (13) der Navigationsmarkierung (60) und der Referenzmarkierung (61) zur Anzeige durch die Augmented-Reality-Head-up-Display-Vorrichtung (41);
**dadurch gekennzeichnet, dass**
durch eine Abweichung zwischen dem Referenzobjekt (62) und der Referenzmarkierung (61), Form und Stärke eines Darstellungsfehlers, der zu einer fehlerhaft positionierten Navigationsmarkierung (60) führt, für einen Fahrer des Kraftfahrzeugs (40) ersichtlich werden.

9. Kraftfahrzeug (40) mit einer Augmented-Reality-Head-up-Display-Vorrichtung (41), **dadurch gekennzeichnet, dass** das Kraftfahrzeug (40) eine Vorrichtung (20) gemäß Anspruch 8 aufweist oder eingerichtet ist, ein Verfahren gemäß einem der Ansprüche 1 bis 6 zur Steuerung einer Anzeige der Augmented-Reality-Head-up-Display-Vorrichtung (41) auszuführen.

## Claims

1. Method for controlling a display of an augmented-reality head-up display apparatus (41) for a motor vehicle (40), comprising the steps of:
- generating (10) a navigation mark (60) for contact-analogue display using the augmented-reality head-up display apparatus (41);
- generating (12) a reference mark (61) for contact-analogue display using the augmented-reality head-up display apparatus (41) based on a reference object (62) in the surrounding area of the motor vehicle (40); and
- outputting (13) the navigation mark (60) and the reference mark (61) for display using the augmented-reality head-up display apparatus (41);
**characterized in that**
the form and extent of a representation error that leads to an incorrectly positioned navigation mark (60) becomes visible to a driver of the motor vehicle (40) due to a deviation between the reference object (62) and the reference mark (61).

2. Method according to Claim 1, wherein the reference object (62) and its position are ascertained from a map, on the basis of which the navigation mark (60) is also generated (10).

3. Method according to Claim 1, wherein the reference object (62) and its position are ascertained by means of a sensor system (43, 44) of the motor vehicle (40).

4. Method according to Claim 3, wherein an ascertained position of the recognized reference object (62) relative to the motor vehicle (40) is converted by computation into an absolute position for an integrated representation of the reference mark (61) with the navigation mark (60).

5. Method according to one of Claims 1 to 4, wherein the reference object (62) is a static object.

6. Method according to Claim 5, wherein the static object is one of the following objects: a vehicle, a building, a pillar, a traffic sign, a streetlight or a piece of urban furniture.

7. Computer-readable storage medium with instructions that, upon execution by a computer, cause the computer to carry out the steps of a method according to one of Claims 1 to 6 for controlling a display of an augmented-reality head-up display apparatus (41) for a motor vehicle (40).

8. Apparatus (20) for controlling a display of an augmented-reality head-up display apparatus (41) for a motor vehicle (40), having
- a graphics generator (23) for generating (10) a navigation mark (60) for contact-analogue display using the augmented-reality head-up display apparatus (41) and for generating (12) a reference mark (61) for contact-analogue display using the augmented-reality head-up display apparatus (41) based on a reference object (62) in a surrounding area of the motor vehicle (40); and
- an output (26) for outputting (13) the navigation mark (60) and the reference mark (61) for display using the augmented-reality head-up display apparatus (41); **characterized in that**
the form and extent of a representation error that leads to an incorrectly positioned navigation mark (60) becomes visible to a driver of the motor vehicle (40) due to a deviation between the reference object (62) and the reference mark (61).

9. Motor vehicle (40) having an augmented-reality head-up display apparatus (41), **characterized in that** the motor vehicle (40) has an apparatus (20) according to Claim 8 or is configured to carry out a method according to one of Claims 1 to 6 for controlling a display of the augmented-reality head-up display apparatus (41).

## Revendications

1. Procédé de commande d'un affichage d'un dispositif d'affichage tête haute à réalité augmentée (41) pour un véhicule automobile (40), comprenant les étapes consistant à :
- générer (10) un repère de navigation (60) pour un affichage à contact analogique par le dispositif d'affichage tête haute à réalité augmentée (41) ;
- générer (12) un repère de référence (61) pour un affichage à contact analogique par le dispositif d'affichage tête haute à réalité augmentée (41) sur la base d'un objet de référence (62) dans un environnement du véhicule automobile (40) ; et
- sortir (13) le repère de navigation (60) et le repère de référence (61) pour l'affichage par le dispositif d'affichage tête haute à réalité augmentée (41) ;
**caractérisé en ce qu'**un écart entre l'objet de référence (62) et le repère de référence (61) permet de mettre en évidence pour un conducteur du véhicule automobile (40) la forme et la sévérité d'un défaut de représentation qui conduit à un repère de navigation (60) positionné de manière erronée.

2. Procédé selon la revendication 1, dans lequel l'objet de référence (62) et sa position sont déterminés à partir d'une carte sur la base de laquelle le repère de navigation (60) est également généré (10).

3. Procédé selon la revendication 1, dans lequel l'objet de référence (62) et sa position sont déterminés au moyen d'un système de capteurs (43, 44) du véhicule automobile (40).

4. Procédé selon la revendication 3, dans lequel une position déterminée de l'objet de référence reconnu (62) par rapport au véhicule automobile (40) est convertie en une position absolue pour une représentation intégrée du repère de référence (61) avec le repère de navigation (60).

5. Procédé selon l'une quelconque des revendications 1 à 4, dans lequel l'objet de référence (62) est un objet statique.

6. Procédé selon la revendication 5, dans lequel l'objet statique est l'un des objets suivants : un véhicule, un bâtiment, un poteau, un panneau de signalisation, un réverbère ou une pièce de mobilier urbain.

7. Support de stockage lisible par ordinateur, comprenant des instructions qui, lorsqu'elles sont exécutées par un ordinateur, font que l'ordinateur exécute les étapes d'un procédé selon l'une quelconque des revendications 1 à 6 pour commander un affichage d'un dispositif d'affichage tête haute à réalité augmentée (41) pour un véhicule automobile (40).

8. Dispositif (20) de commande d'un affichage d'un dispositif d'affichage tête haute à réalité augmentée (41) pour un véhicule automobile (40), comprenant
- un générateur graphique (23) permettant de générer (10) un repère de navigation (60) pour un affichage à contact analogique par le dispositif d'affichage tête haute à réalité augmentée (41) et permettant de générer (12) un repère de référence (61) pour un affichage à contact analogique par le dispositif d'affichage tête haute à réalité augmentée (41) sur la base d'un objet de référence (62) dans un environnement du véhicule automobile (40) ; et
- une sortie (26) permettant de sortir (13) le repère de navigation (60) et le repère de référence (61) pour l'affichage par le dispositif d'affichage tête haute à réalité augmentée (41) ;
**caractérisé en ce qu'**un écart entre l'objet de référence (62) et le repère de référence (61) permet de mettre en évidence pour un conducteur du véhicule automobile (40) la forme et la sévérité d'un défaut de représentation qui conduit à un repère de navigation (60) positionné de manière erronée.

9. Véhicule automobile (40) comprenant un dispositif d'affichage tête haute à réalité augmentée (41),
**caractérisé en ce que** le véhicule automobile (40) présente un dispositif (20) selon la revendication 8 ou est aménagé pour exécuter un procédé selon l'une quelconque des revendications 1 à 6 pour commander un affichage du dispositif d'affichage tête haute à réalité augmentée (41).
